# EUROPEAN PATENT SPECIFICATION

(11) **EP 2 709 794 B1**
(45) Date of publication and mention of the grant of the patent: **02.03.2016**
(21) Application number: 12729210.0
(22) Date of filing: 14.05.2012
(51) Int. Cl.: B23K 26/38, B23K 26/08, B23K 26/03, G01B 11/00

(54) **METHOD FOR SCANNING A TUBE INTENDED TO BE WORKED ON A LASER CUTTING MACHINE USING A SENSOR FOR MEASURING THE RADIATION REFLECTED OR EMITTED BY THE TUBE**
VERFAHREN ZUM ABTASTEN EINES ROHRES ZUM BEARBEITEN IN EINER LASERSCHNEIDANLAGE MIT EINEM SENSOR ZUM MESSEN DER VON DER RÖHRE REFLEKTIERTEN BZW. EMITTIERTEN STRAHLUNG
PROCÉDÉ DE BALAYAGE D'UN TUBE DESTINÉ À ÊTRE TRAVAILLÉ SUR UNE MACHINE DE DECOUPE LASER, UTILISANT UN CAPTEUR POUR MESURER LE RAYONNEMENT RÉFLÉCHI OU ÉMIS PAR CE TUBE

(30) Priority: 12.05.2011 IT TO20110425
(43) Date of publication of application: 26.03.2014
(73) Proprietor: Adige S.p.A., 38056 Levico Terme (TN) (IT)
(72) Inventor: GALVAGNINI, Paolo, I-38060 NOGAREDO (Trento) (IT); NICOLETTI, Sergio, I-38056 LEVICO TERME (Trento) (IT); BRIGADUE, Matteo, I-38043 BEDOLLO (Trento) (IT)
(74) Representative: Rondano, Davide
(86) International application number: PCT/IB2012/052388
(87) International publication number: WO 2012/153315

(56) References cited:
- JP-A- 1 273 683
- JP-A- 7 060 469
- JP-A- 2000 117 468
- JP-A- 2010 125 517
- US-A1- 2009 110 265

## Description

The present invention refers in general to a method for laser cutting of tubes, and more specifically to a method for scanning a tube on a laser cutting machine, as specified in the preamble of independent claim 1.

A method of the type identified above is known from JP 2010 125517.

In the following description and claims, the term "tube" is used to identify any elongated three-dimensional body, i.e. any body extending along a main direction (hereinafter referred to as longitudinal axis) and having a uniform cross-section (which can indifferently be open or closed) along the longitudinal axis.

Laser cutting of tubes is a well-known industrial application, but suffers however from some difficulties due in particular to the nature of the cross-section of the tube which has to be worked and to the difference between the nominal working position and the position actually reached by the tube at the end of its movement.

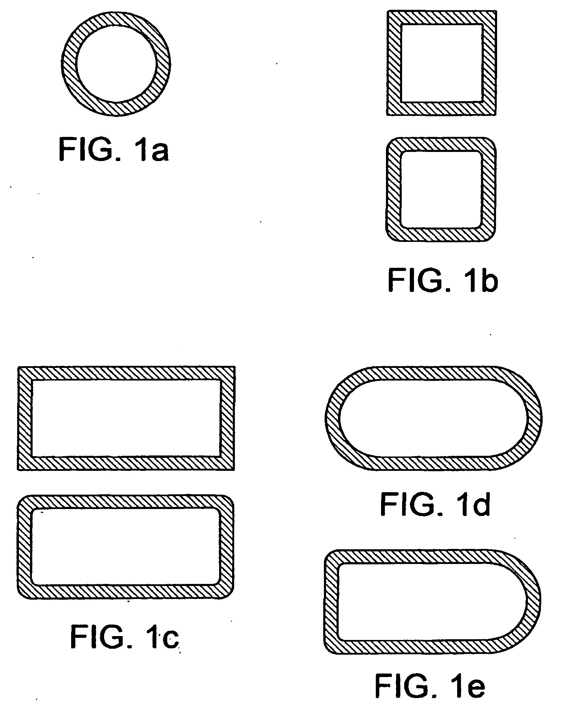

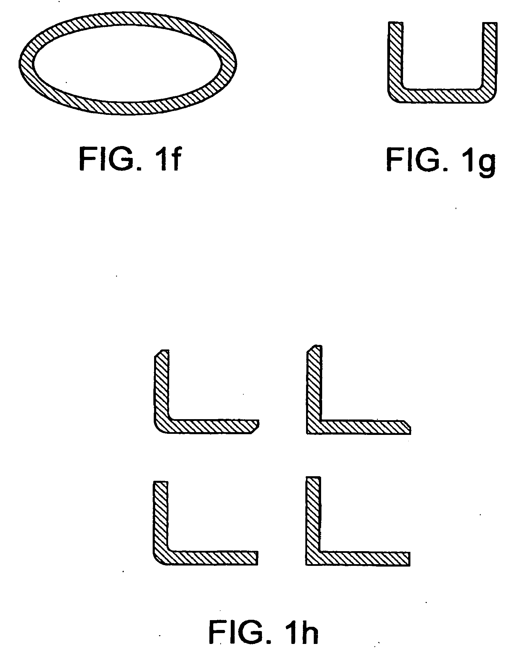

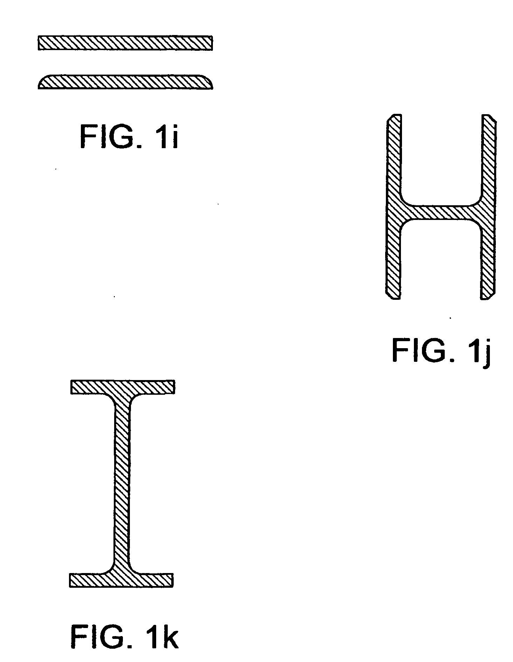

As far as the nature of the cross-section of the tube is concerned, the actual cross-section of the tube differs from the nominal one due to the geometrical errors. Various types of tube cross-sections can be worked by laser, and the most common ones are those illustrated in Figure 1 of the attached drawings. In particular, the following types of cross-section may occur:
- circular cross-section (Figure 1a),
- square cross-section (Figure 1b),
- rectangular cross-section (Figure 1c), be it with rounded or sharp edges,
- oval flat cross-section (Figure 1d),
- oval semi-flat cross-section (Figure 1e),
- elliptical cross-section or cross-section in the shape of a squeezed circle (Figure 1f),
- U- or C-shaped cross-section (Figure 1g), be it obtained by bending or by extrusion, and hence be it with the outer or inner edges as rounded edges or with the outer or inner edges as sharp edges,
- L-shaped cross-section (Figure 1h), be it obtained by bending or by extrusion, and hence be it with rounded-edged sides or with sharp-edged sides,
- flat plate cross-section (Figure 1i), be it with sharp or chamfered edges, and
- H-shaped (Figure 1j) or I-shaped (Figure 1k) cross-section.

Apart from those cases in which the cross-section does not clearly have at least one flat face (it is the case of a circular cross-section or of an elliptical cross-section), it is possible to define an edge or reference face, a fillet radius or chamfer and a working face. In other words, when for instance a cutting operation is being carried out on a face (working face) of a tube, it is possible to define where this face starts or ends by using, as reference, another face, typically a face perpendicular to the working face, which is connected to the working face by a fillet.

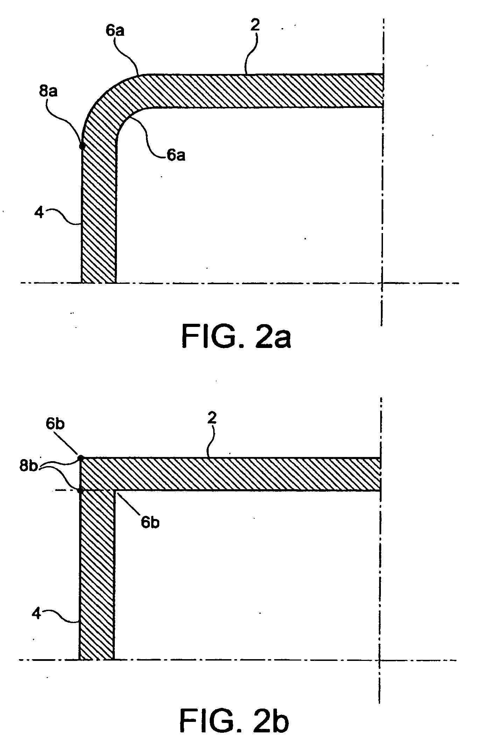

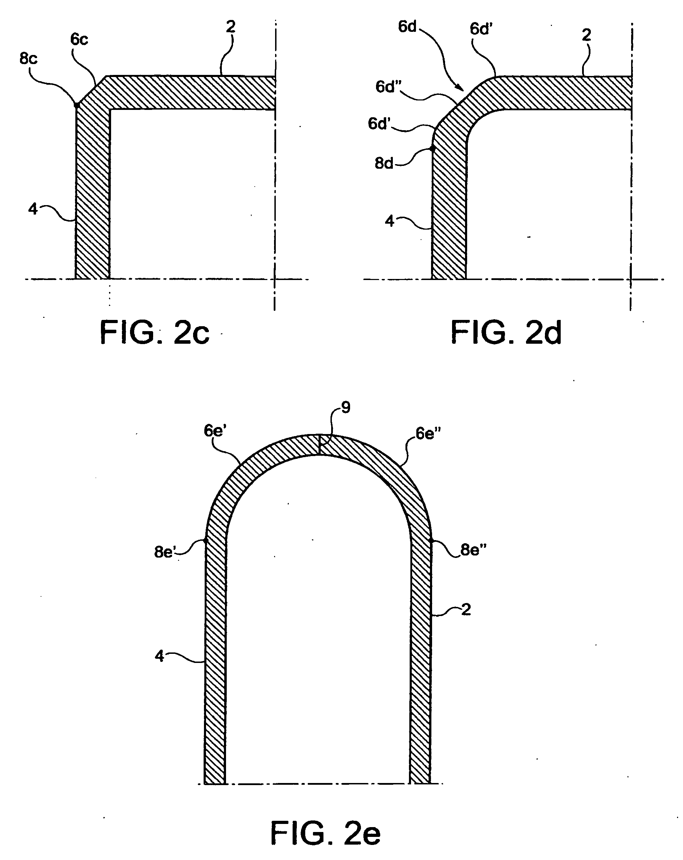

The fillets mentioned above with reference to the various types of cross-sections may be in the form of a sharp edge, of a quarter of circle or of a chamfer, as shown in Figure 2.

Figure 2a shows an angle portion of a rectangular cross-section of a tube, in which a working face 2 and a reference face 4 are connected to each other by a fillet 6a in the form of a quarter of circle. A check point used by the laser working apparatus as reference for determining the position of the fillet, and hence of the reference face, is indicated 8a. Figure 2b shows an angle portion of a rectangular cross-section of a tube with a sharp-edged fillet 6b and two associated check points 8b. Figure 2c shows an angle portion of a rectangular cross-section of a tube with a first chamfered fillet 6c and a check point 8c, while Figure 2d shows an angle portion of a rectangular cross-section of a tube with a second chamfered fillet 6d, comprising two arc-shaped lengths 6d' and a straight length 6d", and with a check point 8d. Figure 2e shows two fillets 6e' and 6e" in the shape of a quarter of circle, which join to each other in a middle zone 9, and two check points 8e' and 8e".

Each procedure requiring that the shape of the fillet be identical to the desired one in order to carry out the measures, for instance position measures, is doomed to failure or at least not to be accurate.

A further problem is that the dimensions of the actual cross-sections of the tubes are different from the nominal ones. The known laser cutting machines are provided with self-adaptation mechanical systems allowing to compensate for slight dimensional changes, but such changes may however cause problems when trying to identify the position of the tube to be worked. One of the methods typically used these days to determine the position of the working face of a tube consists for instance in rotating the tube by a 90-degree angle and touching the relative reference face. A difference between the measured dimensions and the nominal one can be interpreted in this case as a rigid displacement of the face in question, but might also be due to the fact that the dimensions of the cross-section are different from the nominal ones.

Another problem, as stated above, is the difference between the nominal position of the tube being worked and the one actually reached at the end of its movement.

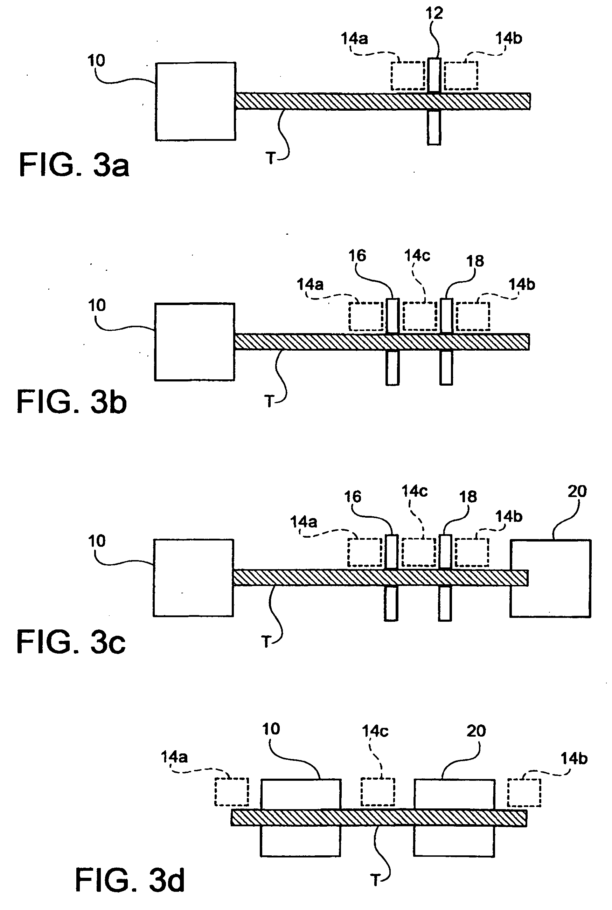

With reference now to Figure 3, several examples of architectures used to move the tubes in the laser cutting machines for cutting of tubes will be described.

Figure 3a schematically shows a spindle-bearing architecture. A spindle arranged to cause a tube T to shift along its own axis and to rotate about its own axis is indicated 10. On the other hand, a bearing through which the tube T passes, and is thus held in the horizontal position, is indicated 12. The laser cutting machine further comprises, in per-se-known manner, a cutting head (not shown) which can work immediately upstream (zone 14a) or downstream (zone 14b) of the bearing 12. The cutting head can be moved between the zones 14a and 14b either by means of a special driving mechanism or as a result of the translation movement of the bearing 12. Alternatively, the movement of the cutting head can result from the combination of the movement caused by its own driving mechanism and of the movement caused by the bearing 12.

Figure 3b schematically shows a three-bearing architecture. A spindle of the type of the one shown in Figure 3a is indicated 10. In case of tubes having a linear weight higher than 25 kg/m, the spindle 10 has, in addition to the functions of supporting and of handling the tube during the working process, also the function of unloading the tube at the end of the working process. Two further spindles made as through spindles are indicated 16 and 18. The cutting head (not shown) is provided with a special driving mechanism so as to be able to work upstream of the two through spindles (zone 14a), downstream of the two through spindles (zone 14b) or between the two through spindles (zone 14c).

Figure 3c schematically shows a four-bearing architecture, which differs from the architecture of Figure 3b in that it further comprises a fourth spindle 20 which is made as a non-through spindle and has the function of extracting, rotating and supporting the tube. Also in this case the cutting head (not shown) is provided with a special driving mechanism so as to be able to work upstream of the two through spindles (zone 14a), downstream of the two through spindles (zone 14b) or between the two through spindles (zone 14c).

Figure 3d schematically shows an architecture with only two through spindles 10 and 20 both having the function of shifting, rotating and extracting the tube. Also in this case the cutting head (not shown) is provided with a special driving mechanism so as to be able work upstream of the two spindles (zone 14a), downstream of the two spindles (zone 14b) or between the two spindles (zone 14c).

All the architectures described above require to know the position of the tube being worked with respect to the reference axis defined by the tube driving system formed by the spindles. Such a requirement applies if the tube driving system of the laser cutting machine is able to centre the tube being worked due to its own symmetry, i.e. is able to apply a force sufficient to reduce the deflection or the torsion of the tube. However, such a requirement is generally met only near the points of contact between the spindles and the tube, due to the stresses to which the tube is subject. As the distance from these points of contact increases, the tube is less and less centred with respect to the reference axis. The more the cutting head works near a point of contact of the tube with a spindle, the more the tube is centred, and in general the tube is more accurately centred when the cutting head works in the zone comprised between two spindles (zone indicated 14c in Figures 3b to 3d). In any case, when working with particularly thin and flexible tubes or with tubes having a high linear weight (by way of example, values higher than 20 kg/m) it is difficult to ensure that the tube is correctly centred.

A further problem associated to the laser working of tubes consists in determining the position of the end, or tip, of the tube being worked, which position is necessary to provide the correct reference for the position of the workings to be carried out on the tube. Also in this case, it is necessary to establish a reference for the position of the tube being worked not as mush with respect to an ideal point in the space, but rather with respect to the actual working position of the tool carrying out the working, in the present case the actual position of the cutting head.

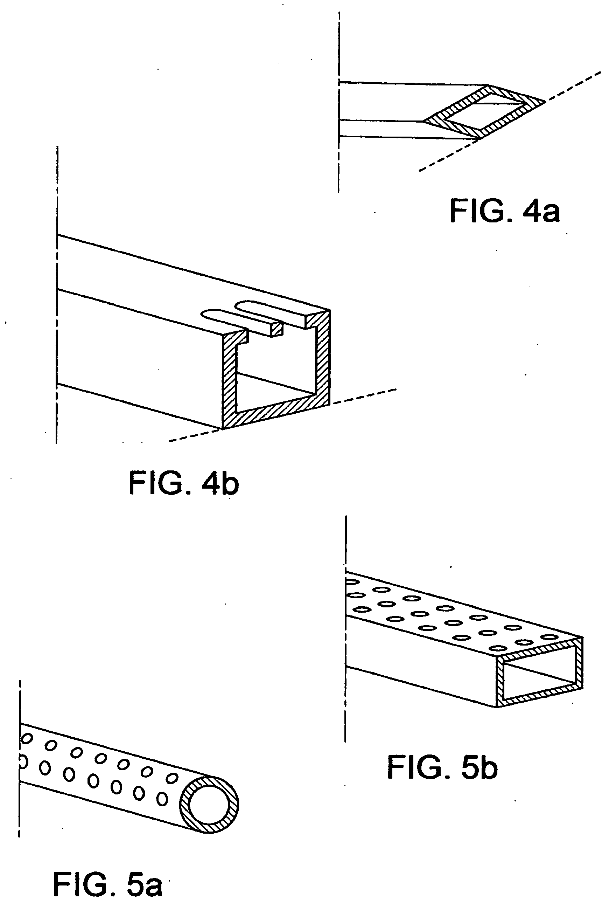

In some cases it is important to search not as much the end of the tube intended as surface or line, but rather a point or an area of a face, which is taken as reference for the workings to be carried out on the tube. This occurs for instance when the end of the tube is angled (Figure 4a) or has a complex profile (Figure 4b).

In other cases the tubes have already been subjected to previous workings, for instance boring operations, and must therefore undergo laser cutting or trimming operations. Figure 5 shows two examples (a) and (b) of tubes previously subjected to boring. In these cases, the laser cutting machine must refer the laser working operations to be carried out to the previous workings, and must therefore search the positions of these latter.

Once laser cutting has been carried out, for instance a circular hole or a square or rectangular slot has been formed, it may be necessary to measure the characteristic dimensions of such a working. This occurs for instance when the dimension of the working is to be assessed taking into account the actual width of the kerf produced by the laser cutting.

It is an object of the present invention to provide a method of scanning a tube intended to be worked by means of a laser cutting machine, which allows to measure the position of a point on a face of the tube independently both of the position of the tube in the laser cutting machine and of the shape of the tube.

This and other objects are achieved by virtue of a method of scanning a tube comprising the steps specified in the characterizing portion of the enclosed independent claim 1. Advantageous modes of implementing the scanning method according to the invention are the subject-matter of the dependent claims, the content of which is to be regarded as being an integral and integrating part of the following description.

The characteristics and the advantages of the invention will appear from the following detailed description, given purely by way of non-limiting example with reference to the appended drawings, in which:
Figures 1a to 1h show examples of cross-sections of tubes which can undergo laser cutting operations;
Figures 2a to 2e show examples of fillet zones between two adjacent flat faces of a tube;
Figures 3a to 3d are schematic side views of some architectures which can be used for moving a tube in a tube laser cutting machine;
Figures 4a and 4b are perspective views which show two examples of shape of a tube end;
Figures 5a and 5b are perspective views showing two examples of tubes to be worked, in which workings, in particular borings, have already been carried out before the laser working;
Figure 6 is a schematic view of a tube laser cutting machine on which the scanning method according to the present invention can be implemented;
Figure 7 is a block diagram of the scanning method according to the present invention; and
Figures 8a and 8b schematically show the preliminary position sampling phase of the scanning method according to the present invention, in case of a tube having a rectangular cross-section with rounded corners.

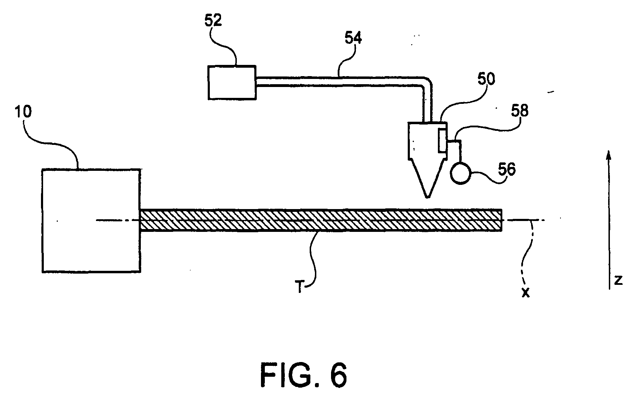

With reference to Figure 6, a laser cutting machine for laser cutting of tubes comprises first of all a tube driving system arranged to shift a tube T along its own axis (indicated x) and to cause it to rotate about its own axis. In the example shown in Figure 6, the driving system comprises only one spindle 10. Alternatively, it is possible to use any of the known architectures described above with reference to Figures 3a to 3d. The laser cutting machine further comprises a cutting head 50 and a laser source 52. The cutting head 50 comprises, among other things, a set of lenses for focussing on the tube T the laser beam coming from the laser source 52 and a nozzle for delivering assisting gas. The cutting head 50 is of per-se-known type and therefore will not be described in detail herein. A head driving system (not shown), which is also of per-se-known type, is associated to the cutting head 50 to move the cutting head 50. The laser source 52 is arranged to send a laser beam to the cutting head 50 through a beam transport system 54 of per-se-known type, such as for instance a mirror system or an optical fiber. The laser cutting machine further comprises a sensor 56 arranged to detect, when the tube T is exposed to the laser beam focussed by the cutting head 50, the radiation reflected (and hence having the same wavelength as the laser beam) or emitted (radiation coming from the material of the tube, or from the gaseous environment in which the tube is immersed, as a result of an excitation caused by the incident beam). The optical signal (reflected or emitted radiation) detected by the sensor 56 has a wavelength comprised in the range from 180 to 2000 nm. The sensor 56 can be fixed to the cutting head 50, as in the example shown in Figure 6, or be fixed to the beam transport system 54.

According to the invention, in order to measure the position of a point on a face of the tube T being worked, the cutting head 50 is suitably operated (in terms of laser power, distance from the tube and pressure of the assisting gas) to focus on the tube a laser beam such as not to be able to etch or cut the tube, but only to cause a radiation to be emitted by the surface of the tube, which radiation is intended to be detected by the sensor 56. For instance, the laser beam used for scanning the surface of the tube T is obtained by setting the power of the laser source 52 in the range from 200 to 3000 W, by using an assisting gas having a pressure comprised in the range from 0,5 to 5 bar and by positioning the cutting head 50 at a distance from the tube comprised in the range from 0,5 to 4,5 mm. The sensor 56 is connected to a control unit 58 which, on the base of the signal provided by the sensor, is able to determine the presence or absence of the tube T with a lateral spatial resolution equal to the radius of the laser beam in the point of incidence on the tube, and hence typically comprised between 25 and 80 µm. Such a lateral spatial resolution is due to the fact that only the zone with the highest power density causes emission of a non-negligible signal.

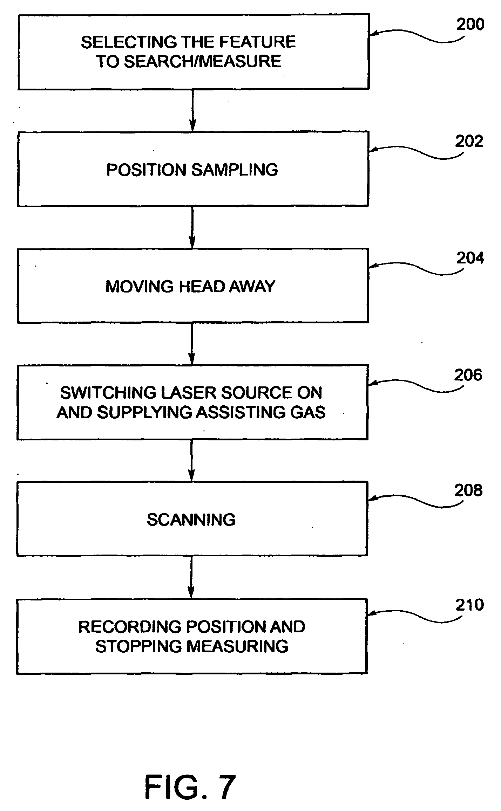

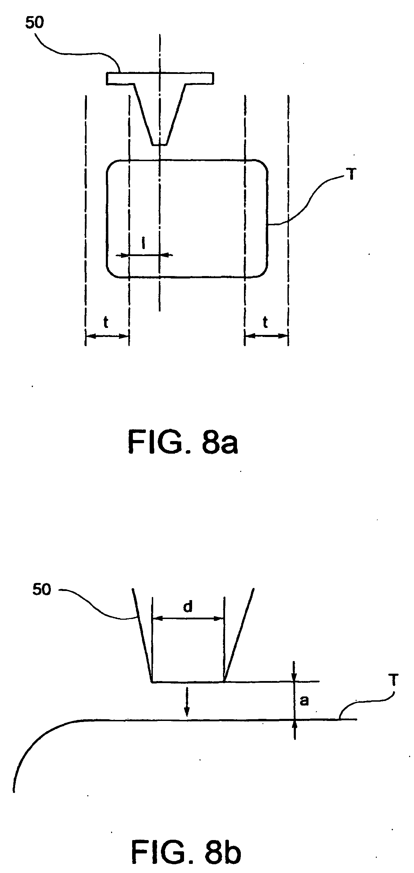

The method of scanning a tube on a laser cutting machine according to the invention, such as the machine described above with reference to Figure 6, will be described now with reference to the block diagram of Figure 7 and to Figures 8a and 8b.

First (step 200 of the block diagram of Figure 7) the geometrical characteristic to be searched/measured is selected on the base of an indication given by the operator. The operator can give his indication for instance by sending a wireless signal to the control unit 58 of the laser cutting machine through a remote portable communication device or by acting directly on an interface module of the machine connected to the control unit 58. For instance, the available options for the operator can be the following ones:
- search of a reference face,
- search of two reference faces,
- search of the end of the tube,
- search of the end in a specific zone,
- search of a hole or of a cavity already present in the tube, and
- measure of a hole or of a cavity.

Depending on the type of search or of measure to be carried out, a scanning is defined, as described further on, in a direction (usually a direction parallel to the axis x of the tube T or a direction perpendicular to this axis) such as not to involve the rotation of the tube T and hence to require only the cutting head 50 to be moved. However, in case a cavity has to be searched on a round tube, it is necessary to rotate the tube about its own axis.

At step indicated 202 in the block diagram of Figure 7 a position preliminary sampling is carried out along a direction z (see Figure 6) perpendicular to the axis x of the tube T in a safe manner, i.e. in a manner such as to avoid damages to the tube, and in a certain manner, i.e. in a position in which the presence of the material of the tube is certain. Figure 8a shows the initial positioning of the cutting head 50 in a position in which the nozzle is certainly facing the tube T. More specifically, Figure 8a shows the two lateral position tolerance fields of the tube T, the width of which is indicated t, and shows that the cutting head 50 is positioned in such a manner that the nozzle is placed between these two fields at a given minimum distance 1 from the nearest field, and hence in a position in which the nozzle is certainly facing the tube T (in the illustrated example facing the top flat face of the tube T). Starting from this initial position, the cutting head 50 is moved along the axis z to carry out the position preliminary sampling, as shown in Figure 8b. The position preliminary sampling can be carried out either by touching the tube T with the nozzle of the cutting head 50 or, as shown in Figure 8b, by using a capacitive sensor system (of per-se-known type) and hence by moving the nozzle of the cutting head 50 towards the surface of the tube T up to a distance from this latter that depends on the diameter d of the nozzle itself. The position preliminary sampling along the axis z, and hence the setting of the distance between the nozzle of the cutting head 50 and the tube T (i.e. the position of the focal point), serves to position the focal point as much as possible on the surface of the material, in order to maximize the resolution of the measure, ensuring the minimum possible diameter of the laser beam hitting on the material.

Using as reference the position determined by means of the position preliminary sampling carried out at step 202, the control unit 58 gets ready to the scanning process by moving, at the step indicated 204 in the block diagram of Figure 7, the cutting head 50 away from the tube T or, in any case, away from the area in which the edge of the material to be found is expected to be positioned. In case the position preliminary sampling is carried out by means of a capacitive sensor, the sampling is also carried out during the movement of the cutting head 50 away from the tube T, thus allowing the cutting head to follow the profile of the tube. During the movement of the cutting head, it is however ensured that the cutting head 50 do not fall to a distance larger than the radius of the tube T. For this purpose, the value of the radius of the tube is set, for convenience' sake, to be equal to the nominal one, since this does not negatively affect the quality of the measure, but at the most only reduces the precision thereof.

At the step indicated 206 in the block diagram of Figure 7, the laser source 52 is switched on with a power such as not to allow the focussed laser beam to cut or etch the material of the tube T and the assisting gas is supplied by the nozzle of the cutting head 50 with a pressure such as to avoid the material to be splashed from the tube towards the inside of the cutting head.

At the step indicated 208 in the block diagram of Figure 7, the cutting head 50 begins the scanning movement, starting from a position in which the absence of material is certain and moving towards the material T, so as to shift progressively in this direction the zone where the laser beam is focussed. The focussed laser beam coming from the source 52 is such as to be reflected when it hits the material of the tube T or to cause emission by the material of the tube or by the gas(es) in which the tube is immersed in the focussing zone. The sensor 56 detects the signal step between the presence of material and the absence of material, and automatically leads the cutting head 50 to position itself in a check point 8a-8e such as one of those shown in Figures 2a to 2e, independently of the fillet being in the form of a quarter of circle, being a sharp-edged fillet or being a chamfered fillet. Possible systematic positioning offsets can be taken into account simply by giving the operator the possibility of adding a fixed offset to the measure.

The control unit 58 continues to monitor the optical signal reflected or emitted by the focussing zone during the scanning process until the end of the tube T is reached. At this point (step 210 of the block diagram of Figure 7), the control unit 58 records the position reached and stops the scanning cycle.

In case of working on a face delimited by other two faces, the problem of the deconvolution between position error and dimensional error can be solved by keeping the tube stationary during the scanning process and by scanning the two reference faces. The operator will have the possibility of choosing whether to refer the working to the centre of the face thus measured or to one of the two sampled edges.

The scanning method according to the invention allows to scan not only the edge and the end of a tube, but also pre-existing workings (such as holes or cavities) of any shape, provided it is possible to give a univocal meaning to the positions detected during the scanning process.

Finally, the scanning process allows to measure the dimension, along the scanning direction, also of a laser working just obtained, for instance for the purposes of quality check or in order to create a reference for subsequent workings. In this latter case, preferably a working is made in a useless zone, for instance inside an area intended to become scrap for a subsequent working, in order to tune the laser apparatus.

If necessary, the scanning process can be repeated to obtain a better resolution.

## Claims

1. Method of scanning a tube (T) intended to be worked on a laser cutting machine, wherein the laser cutting machine comprises a cutting head (50) arranged to focus a laser beam, generated by a laser source (52), on the tube (T) to be worked,
the method comprising the steps of
a) carrying out a position sampling along a sampling direction (z) perpendicular to the axis (x) of the tube (T) in a sampling position in which a nozzle of the cutting head (50) is certainly facing the tube (T),
**characterized**
**in that** the laser cutting machine comprises sensor means (56) arranged to detect, when the tube (T) is hit by the laser beam focussed by the cutting head (50), a radiation reflected or emitted by the tube (T) and to provide a signal indicative of such a radiation, and
**in that** the method further comprises the following steps:
b) emitting through the cutting head (50) a focussed laser beam such as not to be able to cut or etch the material of the tube (T),
c) moving the cutting head (50) along a given scanning direction, and
d) while the cutting head (50) is moving along the scanning direction, detecting through said sensor means (56) the radiation reflected or emitted by the tube (T) and establishing point by point, on the base of the signal provided by said sensor means (56), the presence or the absence of material of the tube (T).

2. Method according to claim 1, wherein the position sampling is carried out by moving the cutting head (50) along said sampling direction (z) until the nozzle touches the tube (T).

3. Method according to claim 1, wherein the position sampling is carried out by using a capacitive sensor and by moving the cutting head (50) along said sampling direction (z) until the nozzle reaches a given distance from the tube (T).

4. Method according to any of the preceding claims, wherein the optical signal detected by said sensor means (56) has a wavelength comprised in the range from 180 to 2000 nm.

5. Method according to any of the preceding claims, wherein the scanning direction along which the cutting head (50) is moved at step c) is directed parallel or perpendicular to the axis (x) of the tube (T).

## Patentansprüche

1. Verfahren zum Scannen eines Rohrs (T), das zur Verarbeitung auf einer Laserschneidmaschine vorgesehen ist, wobei die Laserschneidmaschine einen Schneidkopf (50) aufweist, der zum Fokussieren einen von einer Laserquelle (52) erzeugten Laserstrahl auf dem zu bearbeitenden Rohr (T) angeordnet ist,
mit den Schritten
a) Ausführen einer Positionsabtastung entlang einer Abtastrichtung (z), die senkrecht zu der Achse (x) des Rohrs (T) ist, in einer Abtastposition, in der eine Düse des Schneidkopfes (50) sicher dem Rohr (T) zugewandt ist, **gekennzeichnet dadurch, dass** die Laserschneidmaschine ein Sensormittel (56) aufweist, das zum Detektieren einer von dem Rohr (T) reflektierten oder emittierten Strahlung, wenn das Rohr (T) von dem durch den Schneidkopf (50) fokussierten Laserstrahl getroffen wird, und zum Liefern eines Signals, das solch eine Strahlung angibt, angeordnet ist, und dadurch, dass das Verfahren ferner die folgenden Schritte aufweist:
b) Emittieren eines fokussierten Laserstrahls durch den Schneidkopf (50), so dass er nicht dazu in der Lage ist, das Material des Rohrs (T) zu schneiden oder zu ätzen,
c) Bewegen des Schneidkopfes (50) entlang einer vorgegebenen Abtastrichtung und
d) während sich der Schneidkopf (50) entlang der Abtastrichtung bewegt, Detektieren der von dem Rohr (T) reflektierten oder emittierten Strahlung durch das Sensormittel (56) und punktweises Feststellen des Vorhandenseins oder des Fehlens von Material des Rohrs (T) auf der Basis des von dem Sensormittel (56) gelieferten Signals.

2. Verfahren nach Anspruch 1, bei dem die Positionsabtastung durch Bewegen des Schneidkopfes (50) entlang der Abtastrichtung (z), bis die Düse das Rohr (T) berührt, ausgeführt wird.

3. Verfahren nach Anspruch 1, bei dem die Positionsabtastung durch Verwenden eines kapazitiven Sensors und durch Bewegen des Schneidkopfes (50) entlang der Abtastrichtung (z), bis die Düse einen vorgegebenen Abstand von dem Rohr (T) erreicht, ausgeführt wird.

4. Verfahren nach einem der vorhergehenden Ansprüche, bei dem das von dem Sensormittel (56) detektierte optische Signal eine Wellenlänge in dem Bereich von 180 bis 2000 nm aufweist.

5. Verfahren nach einem der vorhergehenden Ansprüche, bei dem die Abtastrichtung, entlang der der Schneidkopf (50) in Schritt c) bewegt wird, parallel oder senkrecht zu der Achse (x) des Rohrs (T) ist.

## Revendications

1. Procédé pour analyser un tube (T) destiné à être travaillé dans une machine à découper par laser, dans lequel la machine à découper par laser comprend une tête de coupe (50) disposée de façon à focaliser un faisceau laser produit par une source laser (52) sur le tube (T) qui doit être travaillé, lequel procédé comprend les étapes de :
a) exécution d'un échantillonnage de position le long d'une direction d'échantillonnage (z) perpendiculaire à l'axe (x) du tube (T) dans une position d'échantillonnage dans laquelle il est certain qu'une buse de la tête de coupe (50) est placée en face du tube (T),
**caractérisé en ce que** la machine de découpe par laser comprend des moyens capteurs (56) disposés de façon à détecter, lorsque le tube (T) est atteint par le faisceau laser focalisé par la tête de coupe (50), un rayonnement réfléchi ou émis par le tube (T) et à produire un signal indiquant ce rayonnement,
et **en ce que** le procédé comprend en outre les étapes suivantes :
b) émission par la tête de coupe (50) d'un faisceau laser focalisé tel qu'il ne soit pas capable de couper ou d'attaquer le matériau du tube (T),
c) déplacement de la tête de coupe (50) dans une direction d'analyse donnée et,
d) pendant que la tête de coupe (50) se déplace dans la direction d'analyse, détection par lesdits moyens capteurs (56) du rayonnement réfléchi ou émis par le tube (T) et détermination point par point, sur la base du signal fourni par lesdits moyens capteurs (56), de la présence ou de l'absence de matériau du tube (T).

2. Procédé selon la revendication 1, dans lequel l'échantillonnage de position est réalisé en déplaçant la tête de coupe (50) dans ladite direction d'échantillonnage (z) jusqu'à ce que la buse touche le tube (T).

3. Procédé selon la revendication 1, dans lequel l'échantillonnage de position est réalisé à l'aide d'un capteur capacitif et en déplaçant la tête de coupe (50) dans ladite direction d'échantillonnage (z) jusqu'à ce que la buse atteigne une distance donnée par rapport au tube (T).

4. Procédé selon l'une quelconque des revendications précédentes, dans laquelle le signal optique détecté par lesdits moyens capteurs (56) a une longueur d'ondes comprise entre 180 et 2 000 nm.

5. Procédé selon l'une quelconque des revendications précédentes, dans lequel la direction d'analyse dans laquelle la tête de coupe (50) est déplacée dans l'étape c) est parallèle ou perpendiculaire à l'axe (x) du tube (T).
